Europäisches Patentamt

European Patent Office

Office européen des brevets

(11) Publication number: **0 234 298 B1**

(12) **EUROPEAN PATENT SPECIFICATION**

(45) Date of publication of patent specification: **15.04.92**   (51) Int. Cl.⁵: **G01F 1/68**, G01P 5/12

(21) Application number: **87101015.3**

(22) Date of filing: **24.01.87**

(54) **Symmetrical bridge circuit for measuring mass air flow.**

(30) Priority: **18.02.86 US 830317**

(43) Date of publication of application:
**02.09.87 Bulletin 87/36**

(45) Publication of the grant of the patent:
**15.04.92 Bulletin 92/16**

(84) Designated Contracting States:
**DE FR GB IT SE**

(56) References cited:
**DE-A- 2 845 662**
**DE-A- 2 906 847**
**DE-A- 3 100 428**

(73) Proprietor: **SIEMENS AKTIENGESELLSCHAFT**
**Wittelsbacherplatz 2**
**W-8000 München 2(DE)**

(72) Inventor: **Carp, Ralph Wolf c/o Allied Corporation**
**P.O. Box 5060 20650 Civic Center Drive**
**Southfield Michigan 48086(US)**

Rank Xerox (UK) Business Services

EP 0 234 298 B1

## Description

This invention relates to a circuit for the measurement of mass air flow in general and in particular for use in a mass air flow sensor to measure the mass air flow into an internal combustion engine.

A circuit of this kind as described in DE 28 45 662 A has a structure as shown in Fig 1:
A bridge circuit with bridge terminals B1, B2 is connected to a power supply through a power driver Q1. A sensing leg and a compensation leg, each leg including a voltage divider with a first resistor - R1, R2 - and an output resistor - R19, R21, are connected to the bridge terminals B1, B2.

The first resistor R1 in the first voltage divider 12 is a sensing element located in the air flow and is responsive to the rate of the air flowing thereacross for modifying the output voltage across the output resistor R19 from which a sensing output voltage is derived.

The first resistor R2 in the second voltage divider 22 is a compensation element located in the air flow and is responsive to the temperature of the air flowing thereacross for modifying the compensating output voltage across the output resistor R21.

The resistors R1, R2 have positive temperature coefficients and are located in the air stream of an internal combustion engine, more particularly in the air flow meter, the resistor R1 being typically located upstream of the resistor R2.

A control amplifier ICIB is electrically connected to receive the sensing output voltage and the compensation output voltage and is operable to control the conduction of the power driver Q1 for supplying power to the bridge.

The resistor R1 is heated by the current flowing therethrough to a temperature determined by the bridge circuit and the resistor R2 is not heated by the circuit but is sensitive to the ambient temperature of the air flowing by the compensation element. The bridge circuit by controlling the power to the circuit maintains the temperature of the resistor R1 at a predetermined temperature above the temperature of the incoming air, thereby changing the bridge voltage which is an analog signal representing the mass of the air flowing across the resistors R1 and R2.

But this is true only if the effect of changing air temperature on R1 is compensated by the effect of R2. Therefore, as both resistors are operated at the same bridge voltage, the matching of the temperature coefficients of the resistance material with the different values of resistance is required.
It is the object of the invention to avoid such matching. The features of the invention are defined in claim 1.

The invention will now be described with reference to the figures where
  Fig 2 shows the structure and
  Fig 3 an embodiment of the invention.

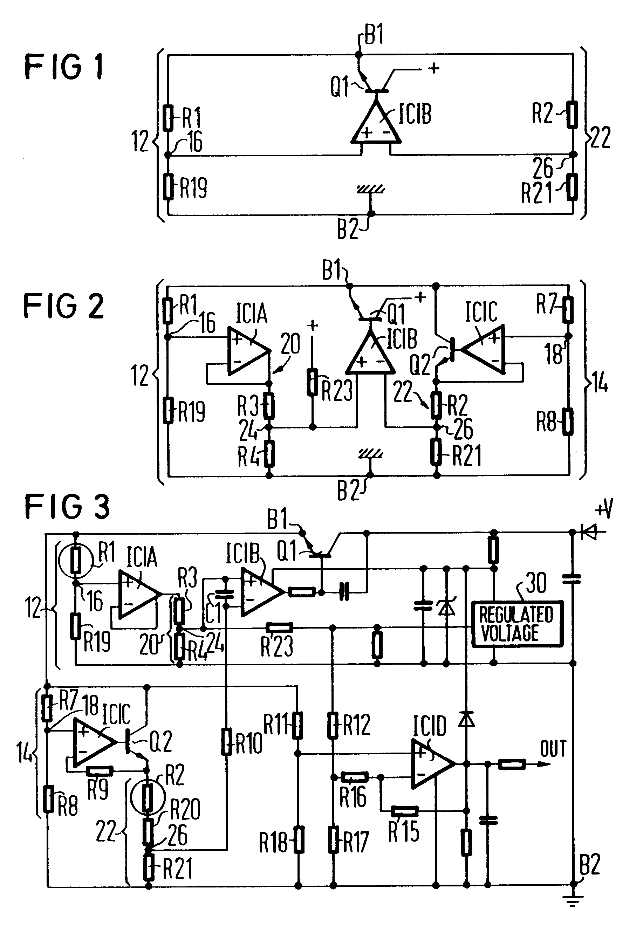

In addition to Fig 1 a third voltage divider 14 including resistors R7 and R8 is connected to the bridge terminals. The values of these resistors define a second division factor with first resistor R7 equal to approximately nine times the value of the output resistor R8. The noninverting input of an amplifier ICIC, whose output is connected to the base lead of a transistor Q2, is connected to the junction 18 of the two resistors R7 and R8. The transistor Q2 is electrically connecting the second voltage divider 22, including the compensating resistor R2, a resistor R20 and the output resistor R21, to the bridge terminals B1, B2. The emitter lead is connected through a feedback resistor R9 to the inverting input of the amplifier ICIC.

The noninverting input of an unity gain amplifier ICIA, is connected to the junction 16 of the resistor R1 and the resistor R19. The inverting input is directly connected to the output of the amplifier ICIA and to a fourth voltage divider 20 with a first resistor R3 and an output resistor R4 and an output 24.

The amplifiers ICIA and ICIC are configured as voltage followers to reduce the electrical loading on the first and third voltage dividers 12, 14 respectively.

The sensing output voltage at the junction 24 of the resistors R3 and R4 of the fourth divider 20 is a function of the second division factor of the third divider 14. The value of the first resistor R3 is nine times the value of the output resistor R4, which is the same relation as with first resistor R7 and output resistor R8 of the third voltage divider 14 defining the second division factor. The junction 24 of the two resistors R3 and R4 is electrically connected to the noninverting input of the control amplifier ICIB.

As an additional feature, a resistor R23 is added to the noninverting input of the control amplifier ICIB to assure that the noninverting input is positive with respect to the inverting input so that the power transistor Q1 will be turned on and the circuit 10 will start when switching on the power supply.

The junction 26 of the resistors R20 and R21 of the second divider 22 is electrically connected to the inverting input of the control amplifier ICIB. The relationship between the resistance values in this voltage divider 22 defines a first division factor N. In the preferred embodiment the total resistance in the upper portion of the voltage divider is R2 + R20. R2, by design, has a value equal to ten ohms at room temperature and the value of R20 is one-half the value of R2 or five ohms, R21 being equal to (R2 + R20) or fifteen ohms.

For the bridge circuit to balance, the sensing output voltage on the noninverting input of the control amplifier ICIB must be equal to the compensating output voltage on its inverting input. The sensing output voltage at the junction 26 of the second divider 22 is equal to a function of the first and second division factors.

In the first divider 12 the value of the resistor R19 is 1,5 times the resistance value of the sensing resistor R1 when unheated. As the power driver Q1 supplies more current to R1, the resistance of R1 increases until R1/R19 = N = (R2 + R20)/R21.

When the velocity of the air increases, the resistance of the sensing resistor R1 decreases as its temperature is reduced by heat conduction to the passing air. This increases the output voltage at the noninverting input of the amplifier ICIA. The output of this amplifier is supplied to the voltage divider 20 which furnishes the sensing output voltage to the noninverting input of the control amplifier ICIB. This causes the output of the control amplifier ICIB to increase thereby driving the power transistor Q1 to supply more power to the sensing resistor R1. This increases the resistance value of the sensing resistor R1 until the bridge balances.

The output signal from the bridge circuit is supplied to an output amplifier ICID. The noninverting input of this amplifier is connected a voltage divider comprising two resistances R11 and R18 connected to the bridge terminals. This voltage divider functions as the gain control of the output amplifier ICID and as the bridge voltage changes the output voltage at the junction of the two resistances R11 and R18 changes accordingly. The inverting input of the output amplifier ICID is connected to a voltage divider comprising two resistances R12 and R17 connected to a regulated voltage. This voltage divider functions as the offset control of the output amplifier ICID. The output of the amplifier ICID is connected in a feedback circuit comprising resistances R15, R16 to its inverting input to set the gain of the amplifier.

The sensing resistor R1 and the compensating resistor R2 are made from nickel and have the same temperature coefficient which is approximately +5420 parts per million per degree centigrade. Therefore a temperature increase of 75°C of the air, will increase the resistance of the sensing resistor R1 by 50% and thereby the voltage across R1. With this increase of air temperature, the resistance of compensation resistor R2 changes too, changing the first factor N, the ratio of the resistances in the second divider 22. Therefore the bridge remains balanced, keeping the voltage at the emitter of the power transistor Q1 and the bridge voltage constant for a given air flow.

The voltage across the compensation resistor R2 is, in the preferred embodiment, approximately 1/12th of the voltage across the sensing resistor R1. The power delivered to R2 is 0.5 mW while the power delivered to R1 is about 75mW at very low air flow rate. The power ratio of the sensing to compensation resistors is about 150:1.

It is a further advantage of the invention that no amplification of the output of the compensation circuit is needed and therefore circuit stability is enhanced. As the phase lag is the same in both bridge legs, the need for compensating capacitors for keeping the circuit stable is avoided which otherwise would slow down the circuit operation. No adjustments of the sensing and compensation loops are needed. For fabrication purposes, a single, inexpensive integrated circuit element is used and thick film techniques may be used since the design depends on the ration of the resistors.

## Claims

1. Circuit for measuring mass air flow comprising
   - a power driver (Q1) connecting a bridge circuit with two bridge terminals (B1,B2) to a power supply;
   - a control amplifier (ICIB) responsive to a sensing output voltage and a compensating output voltage for controlling the power driver (Q1) and thereby adjusting the bridge voltage between the bridge terminals (B1,B2);
   - an output amplifier (ICID) responsive to the bridge voltage for generating a signal representing the mass air flow;
   - wherein the bridge circuit has a first (12) and a second (22) voltage divider,each of them being electrically coupled to the bridge terminals and including a first resistor (R1; R2) and an output resistor (R19;R21) and wherein
   - the first voltage divider (12,R1,R19) is including a sensor element as the first resistor (R1) and furnishing an output voltage across its output resistor (R19) from which the sensing output voltage is derived,
   - the second voltage divider (22;R2,R21) is including a compensating element as the first resistor (R2) and furnishing the compensating output voltage across its output resistor (R21),
   - the sensing resistor (R1) and the compensating resistor (R2) are located in the air flow and responsive to the air flow and the temperature of the air respectively;
   - a third voltage divider (14) being connected to the bridge terminals and having a first resistor (R7) and an output resistor (R8),the relation of the resistances of which defining a division factor;
- the second voltage divider (22) being electrically coupled parallel to the output resistor (R8) of the third voltage divider (14);
- a fourth voltage divider (20,R3,R4) being electrically coupled parallel to the output resistor (R19) of the first voltage divider (12), and
  - having a first resistor (R3) and an output resistor (R4), the relation of the resistances of these resistors being given by the division factor of the third voltage divider (14) and
  - furnishing the sensing output voltage across its output resistor(R4).

2. Circuit according to claim 1 wherein the sensing resistor (R1) and the compensating resistor (R2) have the same temperature coefficients.

3. Circuit according to claim 2 wherein the sensing and the compensating resistor are fabricated from the same material.

4. Circuit according to claim 2 wherein the ratio of the resistances of the output resistor (R19) and of the sensing resistor (R1) when unheated of the first voltage divider is 1,5.

5. Circuit according to claim 1 additionally including voltage follower means (ICIA,ICIC) coupling the first voltage divider (12) to the fourth voltage divider (20) and the second voltage divider (22) to the third voltage divider (14).

6. Circuit according to claim 5 additionally including a transistor (Q2) which is electrically coupling the second voltage divider (22) to the bridge terminals and which is controlled by said voltage follower means (ICIC) connected to the output (18) of the third voltage divider (14).

7. Circuit according to claim 1 additionally including means (R23) electrically connected to one input of said control amplifier (ICIB) for causing the control amplifier to turn on said power driver (Q1) when the power supply to the circuit is initially switched on.

8. Circuit according to claim 1 wherein said output amplifier (ICID) has one input electrically coupled to the output of a voltage divider (R11,R18) which is connected to the bridge terminals and has another input coupled to a fixed reference voltage.

**Revendications**

1. Circuit pour mesurer un débit-masse d'air, comprenant :
   - un élément d'attaque de puissance (Q1) qui connecte à une alimentation un circuit en pont ayant deux bornes de pont (B1, B2) ;
   - un amplificateur de commande (ICIB) qui réagit à une tension de sortie de détection et à une tension de sortie de compensation, de façon à commander l'élément d'attaque de puissance (Q1), et à régler ainsi la tension du pont entre les bornes de pont (B1, B2) ;
   - un amplificateur de sortie (ICID) qui réagit à la tension du pont en générant un signal représentant le débit-masse d'air ;
   - dans lequel le circuit en pont comporte des premier (12) et second (22) diviseurs de tension, chacun d'eux étant connecté électriquement aux bornes de pont, et comprenant une première résistance (R1 ; R2) et une résistance de sortie (R19 ; R21), et dans lequel
     - le premier diviseur de tension (12, R1, R19) comprend un élément détecteur pour la première résistance (R1), et il fournit aux bornes de sa résistance de sortie (R19) une tension de sortie à partir de laquelle est obtenue la tension de sortie de détection,
     - le second diviseur de tension (22 ; R2, R21) comprend un élément de compensation pour la première résistance (R2), et il fournit la tension de sortie de compensation aux bornes de sa résistance de sortie (R21),
     - la résistance de détection (R1) et la résistance de compensation (R2) sont placées dans l'écoulement d'air et elles réagissent respectivement au débit d'air et à la température de l'air ;
   - un troisième diviseur de tension (14) qui est connecté aux bornes de pont et qui comporte une première résistance (R7) et une résistance de sortie (R8), la relation entre les valeurs de ces résistances définissant un facteur de division ;
   - le second diviseur de tension (22) étant connecté électriquement en parallèle sur la résistance de sortie (R8) du troisième diviseur de tension (14);
   - un quatrième diviseur de tension (20, R3, R4) qui est connecté électriquement en parallèle sur la résistance de sortie (R19) du premier diviseur de tension (12), et

- qui comporte une première résistance (R3) et une résistance de sortie (R4), la relation entre les valeurs de ces résistances étant donnée par le facteur de division du troisième diviseur de tension (14), et
- qui fournit la tension de sortie de détection aux bornes de sa résistance de sortie (R4).

2. Circuit selon la revendication 1, dans lequel la résistance de détection (R1) et la résistance de compensation (R2) ont les mêmes coefficients de température.

3. Circuit selon la revendication 2, dans lequel les résistances de détection et de compensation sont fabriquées à partir du même matériau.

4. Circuit selon la revendication 2, dans lequel le rapport des valeurs de la résistance de sortie (R19) et de la résistance de détection (R1), à l'état non chauffé, du premier diviseur de tension, est égal à 1,5.

5. Circuit selon la revendication 1, comprenant en outre des moyens suiveurs de tension (ICIA, ICIC) qui connectent le premier diviseur de tension (12) au quatrième diviseur de tension (20), et le second diviseur de tension (22) au troisième diviseur de tension (14).

6. Circuit selon la revendication 5, comprenant en outre un transistor (Q2) qui connecte électriquement le second diviseur de tension (22) aux bornes de pont, et qui est commandé par les moyens suiveurs de tension (ICIC) qui sont connectés à la sortie (18) du troisième diviseur de tension (14).

7. Circuit selon la revendication 1, comprenant en outre des moyens (R23) qui sont connectés électriquement à une entrée de l'amplificateur de commande (ICIB), pour faire en sorte que l'amplificateur de commande débloque l'élément d'attaque de puissance (Q1) au moment de la mise en fonction initiale de l'alimentation du circuit.

8. Circuit selon la revendication 1, dans lequel l'amplificateur de sortie (ICID) comporte une entrée connectée électriquement à la sortie d'un diviseur de tension (R11, R18) qui est connecté aux bornes de pont, et il comporte une autre entrée qui est connectée à une tension de référence fixée.

**Patentansprüche**

1. Schaltung zum Messen des Massendurchflusses von Luft mit
   - einer Treiberstufe (Q1), die zwei Brückenanschlüsse (B1, B2) einer Brückenschaltung an eine Stromversorgung anschließt,
   - einem Steuerverstärker (ICIB), der auf eine Tastausgangsspannung und eine Kompensationsausgangsspannung zum Steuern der Leistungsstufe (Q1) anspricht und damit die Brückenspannung zwischen den Brückenanschlüssen (B1,B2) einstellt,
   - einem Ausgangsverstärker (ICID), der auf die Brückenspannung anspricht, um ein den Massendurchfluß darstellendes Signal zu erzeugen
   - wobei die Brückenschaltung einen ersten (12) und einen zweiten (22) Spannungsteiler aufweist, von denen jeder elektrisch an die Brückenanschlüsse angeschlossen ist und einen ersten Widerstand (R1,R2) und einen Ausgangswiderstand (R19,R21) aufweist und wobei
     - der erste Spannungsteiler (12,R1,R19) ein Sensorelement als ersten Widerstand (R1) aufweist und eine Ausgangsspannung an seinem Ausgangswiderstand (R19) liefert, von der die Tastausgangsspannung abgeleitet wird,
     - der zweite Spannungsteiler (22;R2,R21) ein Kompensationselement als ersten Widerstand (R2) aufweist und die Kompensationsausgangsspannung am Ausgangswiderstand (R21) liefert
     - der Tastwiderstand (R1) und der Kompensationswiderstand (R2) sind in der Luftströmung angeordnet und sprechen jeweils auf den Luftdurchsatz und die Lufttemperatur an,
   - einen dritten Spannungsteiler (14), der an die Brückenanschlüsse angeschlossen ist und einen ersten Widerstand (R7) und einen Ausgangswiderstand (R8) aufweist, deren Widerstandsverhältnis einen Teilungsfaktor definiert
   - wobei der zweite Spannungsteiler (22) parallel zum Ausgangswiderstand (R8) des dritten Spannungsteilers (14) angeschlossen ist;
   - einen vierten Spannungsteiler (20,R3,R4), der parallel an den Ausgangswiderstand (R19) des ersten Spannungsteilers (12) angeschlossen ist und

- einen ersten Widerstand (R3) und einen Ausgangswiderstand (R4) aufweist, deren Widerstandsverhältnis von dem Teilungsfaktor des dritten Spannungsteilers (14) bestimmt ist und der
- die Tastausgangsspannung an seinem Ausgangswiderstand (R4) liefert.

2. Schaltung nach Anspruch 1, wobei der Tastwiderstand (R1) und der Kompensationswiderstand (R2) die gleichen Temperaturkoeffizienten aufweisen.

3. Schaltung nach Anspruch 2, wobei der Tastwiderstand und der Kompensationswiderstand aus dem gleichen Material hergestellt sind.

4. Schaltung nach Anspruch 2, wobei das Widerstandsverhältnis des Ausgangswiderstandes (R19) und des Tastwiderstandes (R1) im nicht erwärmten Zustand des ersten Spannungsteilers gleich 1,5 ist.

5. Schaltung nach Anspruch 1, mit einer Spannungsfolgeschaltung (ICIA,ICIC) zum Anschluß des ersten Spannungsteilers (12) an den vierten Spannungsteiler (20) und des zweiten Spannungsteilers (22) an den dritten Spannungsteiler (14).

6. Schaltung nach Anspruch 5, mit einem Transistor (Q2) zum Anschluß des zweiten Spannungsteilers (22) an die Brückenanschlüsse, wobei der Transistor von der Spannungsfolgeschaltung (ICIC) gesteuert ist, die an den Ausgang (18) des dritten Spannungsteilers (14) angeschlossen ist.

7. Schaltung nach Anspruch 1, mit an einen Eingang des Steuerverstärkers (ICIB) angeschlossenen Mitteln (R23), um den Steuerverstärker zu veranlassen, die Treiberstufe (Q1) einzuschalten, wenn die Stromversorgung der Schaltung zum Betriebsbeginn eingeschaltet wird.

8. Schaltung nach Anspruch 1, wobei der Ausgangsverstärker (ICID) mit einem Eingang an den Ausgang eines Spannungsteilers (R11,R18) angeschlossen ist, der mit den Brückenanschlüssen verbunden ist und bei dem ein weiterer Eingang an eine feste Bezugsspannung angeschlossen ist.

FIG 1

FIG 2

FIG 3